# EUROPEAN PATENT SPECIFICATION

(11) **EP 1 621 318 B1**
(45) Date of publication and mention of the grant of the patent: **05.11.2008**
(21) Application number: 05076713.6
(22) Date of filing: 26.07.2005
(51) Int. Cl.: B29C 45/72, B29C 49/64, B29C 45/42

(54) **Cooling device for preforms, as well as take-out device and production apparatus provided with such a cooling device**
Vorrichtung zum Kühlen von Vorformlingen, sowie eine Entnahmevorrichtung und Herstellungsvorrichtung aufweisend eine dergestalte Kühlvorrichtung
Dispositif de refroidissement des parisons, ainsi qu'un dispositif de déchargement et dispositif de production équipé d'un tel dispositif de refroidissement

(30) Priority: 27.07.2004 NL 1026732
(43) Date of publication of application: 01.02.2006
(73) Proprietor: Tool-Tech Holding B.V., 7800 AG Emmen (NL)
(72) Inventor: van Manen, Hendrik Johan, 7822 EH Emmen (NL); Albers, Hendrikus Johannes Theodorus, 7751 GK Dalen (NL)
(74) Representative: Winckels, Johannes Hubertus F.

(56) References cited:
- EP-A- 0 592 021
- WO-A-02/051614
- WO-A-03/022548
- WO-A-20/05021236
- DE-U1- 29 810 567

## Description

The invention relates to a cooling device for cooling the neck portion of preforms for plastic holders in cooperation with a take-out robot device of the type disclosed in European Patent 0 592 021. The invention further relates to a take-out robot device provided with such a cooling device, and to a production apparatus for preforms.

Preforms for bottles are conventionally manufactured in an injection molding apparatus in multiple injection molds with a number of mold cavities, for instance 48 or even 96. After opening of a mold of an injection molding apparatus, the preforms are taken up in a robot arm brought between the mold parts, which robot arm removes the preforms from the injection molding apparatus and transfers them to, for instance, a cooling and/or discharge device. For this purpose, the robot arm is provided with a number of receiving tubes which are arranged in a configuration corresponding to the configuration of the mold cavities. After opening of the mold, the preforms are situated on cores of the mold, and the receiving tubes can be brought in front of and in alignment with the preforms through suitable control of the robot arm. Next, the preforms can be transferred to the receiving tubes of the robot arm in one of the ways known for that purpose. After that, the robot arm is withdrawn and the mold can be closed again for a next injection molding cycle.

The preforms usually comprise a smooth elongate tubular part, which is closed at one end. From this tubular part, later the body of the plastic bottle or holder to be produced is formed. The other end of the tubular part is provided with a neck portion provided with screw thread or the like, and a radial collar situated between the neck portion and the smooth tubular part. The collar and the screw thread portion, also called the finish, already have the eventual shape and size. The preforms are received in the tubes of the robot arm in such a way that the tubular part of a preform lies in a small tube or cavity, while the collar and the screw thread portion project outside the tube or the cavity.

In addition to a retaining function, the tubes also have a cooling function. In this connection, the tubes are also referred to as cooling tubes or cooling tube units. For this purpose, the tubes are conventionally provided with cooling means such as channels for a cooling medium.

The preforms are retained in the receiving tubes by means of reduced pressure. When the robot arm is located at a suitable place outside the injection molding apparatus, the preforms are removed from the receiving tubes.

The cycle times employed in modern injection molding machines, that is, the period between the time of opening of the injection mold in order to discharge a batch of preforms and the time at which the mold is opened the next time, are very short. As a consequence, the robot arm must each time be ready to take up a new batch of preforms within a correspondingly short time interval. Therefore the residence time of the preforms in the cooling tubes of the robot arm can only be short. Since every manipulation of not yet completely cooled preforms entails a chance of damage and since the preforms are less vulnerable according as cooling has progressed further, it is important that the cooling effect of the cooling tubes of the robot arm be as great as possible.
A cooling tube unit having an improved cooling effect is described in applicant's Dutch patent application no. 1024038. Furthermore, European patent 0 592 021 discloses a robot device, which enables a relatively long residence time of the preforms in the cooling tubes. The residence time of the preforms in the cooling tubes can be a multiple of the cycle time of the injection molding machine, so that a considerably enhanced cooling of the preforms can be accomplished before the preforms are removed from the cooling tubes.

The known apparatus comprises a robot device with a number of robot arms, which are mounted on a rotor with a number of discrete positions, that is, in each discrete position, one of the robot arms is in a receiving position in which the respective arm can be brought into the opened mold to receive the preforms formed in the injection mold cavities prior to the opening of the mold, and to bring them outside the mold. Next, the respective robot arm is brought into another position and a next robot arm is brought into the receiving position, etc.

As already noted, the cooling tubes are conventionally provided with cooling means for cooling the preforms situated in the receiving tubes. What can be accomplished in this way is that the preforms are sufficiently cooled and hence are sufficiently strong to minimize the chance of damage to the preforms during their transfer to the discharge device.

However, according as the cycle time of the injection molding machine and the robot device gets shorter as a consequence of the general aim for a highest possible production capacity, the time available for cooling of the preforms decreases. As a result, particularly for the preform finish parts reaching outside the receiving tubes, there is an increased risk that they cannot cool off sufficiently during their residence in the robot.

From international patent application WO 02/051614 it is known to cool the portions of preforms that project outside cooling tubes, by passing air currents through air guides against the outsides of the portions of the preforms projecting outside the cooling tubes. These guides are integrated into the take-out unit in which the cooling tubes are incorporated and arranged for passing cooling agent in lateral directions against the preforms. Such additions to the take-out plate increase the mass of the take-out plate which is to be reciprocated in operation and render its construction complex.

From international patent application WO 03/022 548 it is moreover known to cool the portions of preforms projecting outside cooling tubes by passing air currents, via air guides mounted on cooling plates, against the outsides of the portions of the preforms projecting outside the cooling tubes. Such cooling plates are reciprocable between a cooling position for cooling preforms present in the cooling tubes opposite the cooling plate and a retracted position which allows the take-out plate to be swiveled without the cooling plate being in the way (see U.S. Patent 6,171,541), and hence are complex constructions.

The object of the invention is to provide an alternative solution to obviate, or at least mitigate, the problem outlined, which is simpler to carry out than the solutions proposed to date.

To this end, according to the invention, a cooling device according to claim 1 is proposed.

The invention can also be embodied in a take-out robot device or a production apparatus provided with such a cooling device as stipulated in claims 9 and 10. Embodiments of the invention are laid down in the dependent claims.

In the following, the invention will be further elucidated with reference to the accompanying drawing of an exemplary embodiment.
Fig. 1 schematically shows in perspective a part of an example of an injection molding apparatus for preforms, comprising a robot;
Fig. 2 schematically shows a top plan view of a similar injection molding apparatus comprising a robot;
Fig. 3 schematically shows, by way of example, an end view of a rotary robot;
Fig. 4 shows a similar view of a rotary robot provided with a cooling device according to the invention;
Fig. 5 schematically shows, in perspective view, an example of a cooling device according to the invention;
Fig. 6 shows a view according to the arrow VI in Fig. 5; and
Fig. 7 schematically shows a similar view to Fig. 6, of a variant of a cooling device according to the invention.

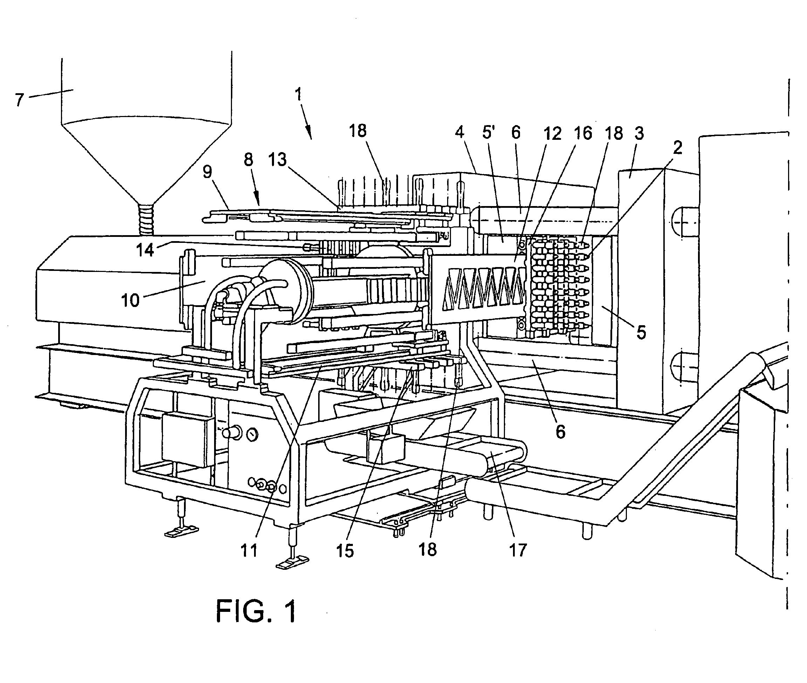

Fig. 1 schematically shows, in perspective, an example of a known injection molding apparatus 1 for producing preforms 2 for plastic bottles or holders. The injection molding apparatus 1 shown comprises a mold with two plates 3, 4 with mold parts 5, 5' adapted for relative movement towards or away from each other along guide bars 6. In Fig. 1, the mold is shown in the open position. In the closed position of the mold, the mold parts jointly form a number of mold cavities into which a suitable plastic is supplied in liquid form for injection molding the preforms. The necessary stock of plastic is contained in a hopper 7.

Fig. 1 further shows a robot 8 which, in this example, comprises a rotary rotor with four arms 9 to 12, of the type described in applicant's European patent 0 592 021. Each of the arms 9 to 12 is of telescopic design and comprises a carrier 13 to 16 with cooling tubes or the like, which can be moved between the parts 5, 5' of the opened mold to remove the newly produced preforms from the mold.

In the situation shown in Fig. 1, the arm 12 with the carrier 16 reaches into the mold. In this example, the robot can rotate about a horizontal axis. When the arm 12 is retracted again, it proceeds to take successively the positions of the arms 9, 10 and 11 in the next phases of the rotation of the robot. As long as the preforms are in the cooling tubes, the preforms can cool off.

In the lowermost or ejecting position, the preforms are removed from the cooling tubes and received on a discharge conveyor 17.

The carriers 13 to 16 can be plate-shaped carriers, but the carriers often consist of a number of parallel strips, each in turn carrying a number of cooling tubes or cooling tube units. A few cooling tubes are indicated by reference numeral 18. The cooling tubes are conventionally provided with channels for a cooling medium such as cooling liquid or cooling air.

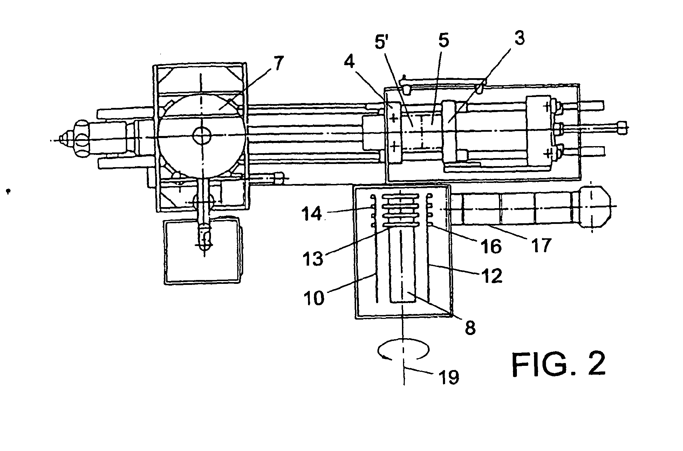

Fig. 2 schematically shows a similar apparatus to that shown in Fig. 1, in top plan view, with corresponding parts being designated by the same reference numerals as in Fig. 1. In Fig. 2 the mold is in the closed position and all robot arms are in the rest position. The central rotation axis of the robot is designated in Fig. 2 by 19.

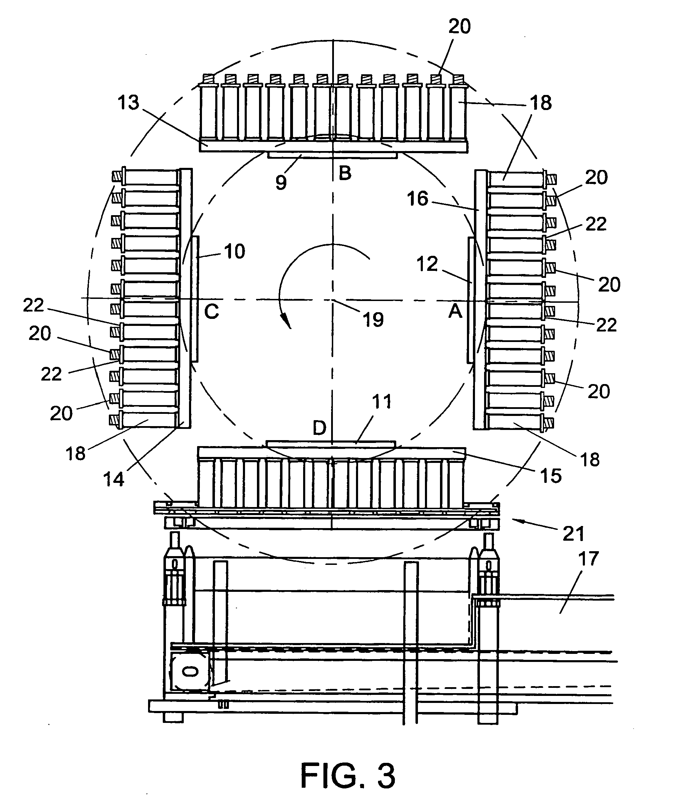

Fig. 3 schematically shows, in end view, an example of a similar robot to that shown in Fig. 1 and Fig. 2. The four possible positions that each robot arm passes in succession are indicated by A, B, C and D. In the situation shown, in the cooling tubes 18, preforms are received, of which the screw thread portions 20 projecting from the cooling tubes and the radial collars 22 are visible.

In position A, a robot arm takes up the preforms just formed in the mold.

In the positions B and C, the preforms can cool. In position D, the cooling tubes have their open ends facing down, so that the preforms, in this example released with a removal device, such as for instance a pull-out device 21, can by gravity fall down further, for instance ending up on a discharge conveyor 17.

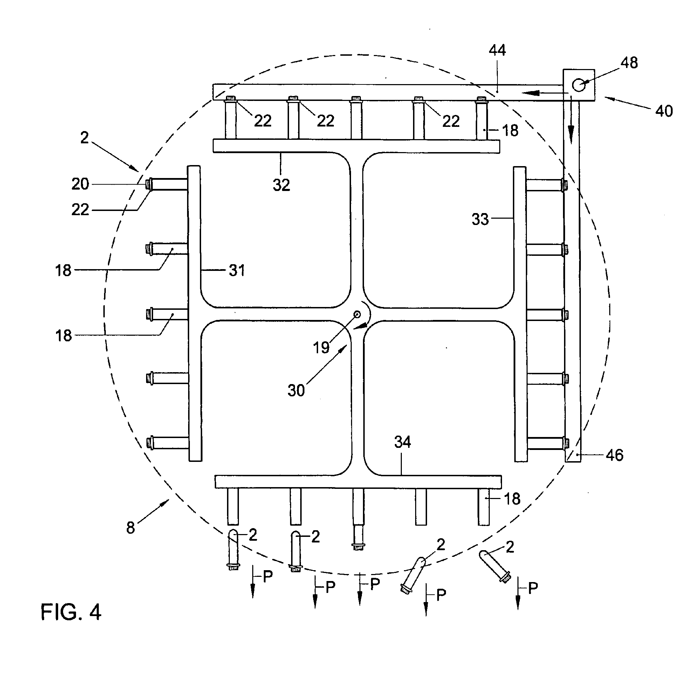

Fig. 4 schematically shows in end view an example of a similar rotary robot 8 to that shown in Figs. 1 to 3, provided with a cooling device according to the invention. The robot 8 shown again comprises a rotor 30 with four arms 31, 32, 33 and 34. In this example, the arm 31 is in the receiving position. In the situation shown, the arm 31 has just received preforms 2 in the cooling tubes 18. The screw thread 20 and the collar 22 of the preforms 2 project outside the cooling tubes and are visible in Fig. 4. The arm 34 is in the ejecting position, in which the preforms 2 are released from the cooling tubes and, as indicated with arrows P, fall onto a discharge device, not shown.

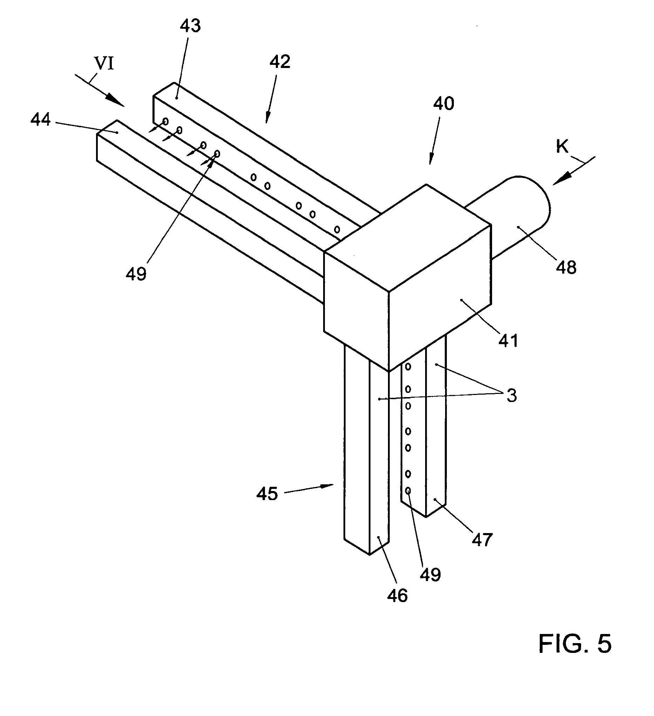

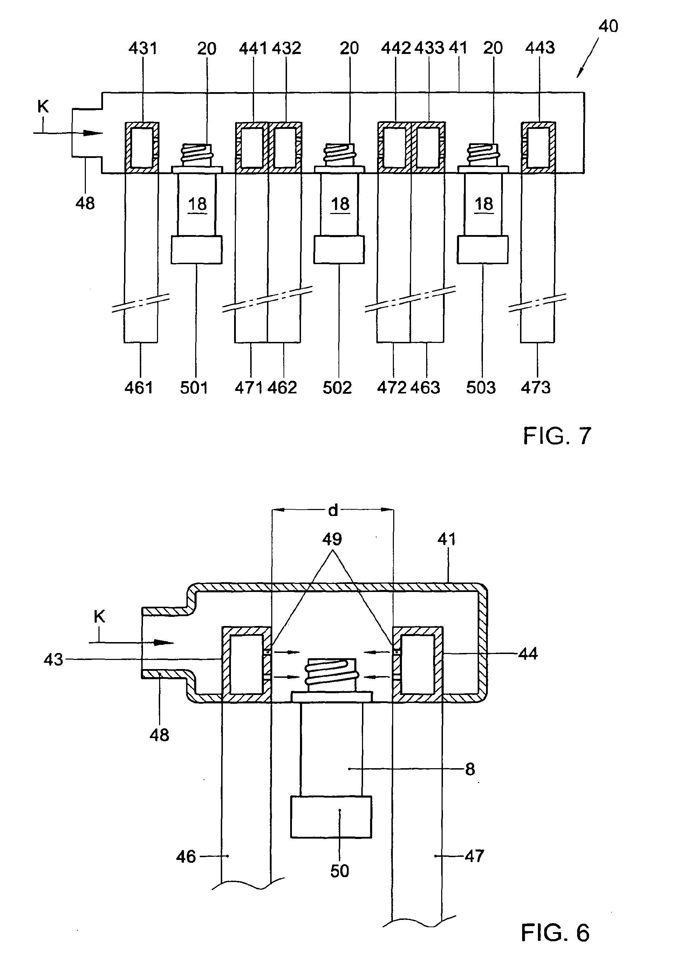

In the example shown in Fig. 4, the arm 31 rotates during the next injection molding cycle of the injection molding machine to the position taken up by the arm 32 in Fig. 4. In effect, the rotor rotates a quarter turn, clockwise. The arms 32 and 33 are in positions respectively situated a quarter turn and half a turn beyond the receiving position. Adjacent these positions, a cooling device 40 is arranged, which is schematically shown in more detail in Figs. 5 and 6. In the example shown, the cooling device 40 comprises a central air chamber 41, from which two pairs 42, 45 of tubular arms 43, 44 and 46, 47, respectively, extend in different directions.

The directions of the sets of tubular arms correspond to the positions of the arms 32 and 33 in Fig. 4. In the example shown, the rotor 30 of the robot 8 has four positions and the rotor arms have four positions, viz. a receiving position, a first cooling position, a second cooling position, and an ejecting position, mutually differing by a quarter of a turn. Accordingly, in this example, the pairs of tubular arms include an angle of 90°.

If a robot with a different number of positions is used, the angle between the tubular arms can be adapted. Also, in such a case, a different number of pairs of tubular arms and if necessary a different number of air chambers could be used.

In the present example, however, there is a single central air chamber 41 with an inlet 48 for cooling air K. The air chamber, at least in operation, is in open communication with the interior of the tubular arms 43, 44 and 46, 47, respectively. The tubular arms of a respective pair are parallel to each other and each have outflow openings 49 for cooling air on the side facing the opposite arm.

The intermediate space "d" between two arms of a pair of tubular arms is such that the preforms 2, the cooling tubes 18 and the cooling tube carrier strips 50 forming part of the robot arms 31 to 34 (Fig. 6) can pass between the arms of a pair upon rotation of the rotor 30.

As can be seen in Figs. 1 and 2, an arm can comprise several parallel carrier strips for cooling tubes. The cooling device can then have a corresponding number of parallel pairs of tubular arms.

In the example shown, the tubular arms have a rectangular cross section, but different shapes are possible. In this example, the free ends of the arms are closed.

The cooling device is positioned such that the outflow openings 49 are aimed at the finish of the preforms in the positions 32 and 33 of Fig. 4. The outflow openings 49 are in fixed positions for each time guiding air to a next set of preforms 2 to be cooled.

Because the portions of the arms 44 to 47 comprising the outflow openings 49 are on opposite sides of the circular path described by the cooling tubes 18 upon rotation of the robot 8, they can remain in fixed positions without these portions of arms impeding the passage of one or more of the passing cooling tubes 18.

The finish of the preforms situated opposite the outflow openings 49 is subjected to an air shower, as it were. It would also be possible, if desired, to give the finish an air shower in just one of the positions 32 or 33, but cooling in several positions of the rotor provides greater cooling. Moreover, this provides the advantage that any difference in cooling air flow rate between outflow openings 49 at the free end of the arms and the end of the arms situated near the air chamber 41 is compensated in that a cooling tube which, for instance in position 32 of Fig. 4, is situated near the free end of the tubular arms, is situated near the air chamber in position 33. Thus, for all preforms, a substantially uniform cooling effect can be obtained.

Fig. 7, for the sake of completeness, schematically shows a similar view to Fig. 6 of a cooling device which is suitable for robot arms which are each provided with multiple carrier strips for cooling tubes. Fig. 7 shows by way of example a cooling device 40 which can cooperate with a take-out robot whose arms each comprise three carrier strips 501, 502 and 503 for cooling tubes 18. In the cooling position, the finish of the preforms which are in the cooling tubes of the carrier strips 501, 502 and 503, respectively, is each time situated between two associated pairs of tubular arms 431, 441 and 432, 442 and 433, 443, respectively, which for the rest can be designed similarly to the arms 43, 44 in Fig. 5. Also shown in Fig. 7 is a second set of pairs of arms 461, 471 and 462, 472 and 463, 473, respectively. In the example shown, the arms 441, 432 and 442, 433 and 471, 462 and 472, 463, respectively, adjoining each other but belonging to different pairs, are shown as separate arms. However, if desired, these arms can also be combined into a single arm which is provided with blow openings on both sides.

It is noted that after the foregoing, diverse constructional variants will be obvious to those skilled in the art, such as an adaptation of the cooling device to the number of carrier strips of the robot arms, the number of arms and positions of the rotor of the robot, the number and the location of the air chambers, etc. In the situation of Fig. 4, it is furthermore possible, for instance, to provide the air chamber with just one pair or set of pairs of tubular arms which provide the preforms with an air shower in just one position of the rotor of the robot. It is also possible to use a single tubular arm, instead of a pair of arms, and to supply air to the finish of the preforms from one side. These and similar modifications will be obvious to those skilled in the art and are understood to fall within the framework of the invention as defined in the appended claims.

## Claims

1. A cooling device for cooling the neck portion of preforms for plastic holders in cooperation with a take-out robot device for a production apparatus for preforms (2), which preforms (2) are situated in cooling tubes (18) of at least one arm (9-12) of the take-out robot (8), which at least one arm (9-12) in operation assumes in succession a number of positions, including a receiving position (A), an ejecting position (D), and at least one cooling position (B, C) situated between the receiving position (A) and the ejecting position (D), the cooling tubes (18) receiving the preforms (2) in such a way that the neck portion (20, 22) of the preforms (2) projects outside the cooling tubes (18), wherein the cooling device (40) is provided with at least one air channel with air outflow openings (49), and wherein, when the cooling device (40) is in cooperation with the take-out robot (8), said at least one air channel is fixed relative to the cooling position (B, C) of the at least one arm (9-12) of the take out robot (8) such that the outflow openings can supply cooling air to the neck portions (20, 22) of the preforms (2) which are situated in the cooling tubes (18) of the at least one arm (9-12) of the robot (8) when this arm (9-12) is in the at least one cooling position (B,C).

2. A cooling device according to claim 1, wherein the air outflow openings (49) are arranged in the mutually facing surfaces of at least one pair of substantially parallel tubular arms (43-46; 431-433, 441-443, 461-463, 471-473) which form the air channels and between which, in the cooling position (C, D), neck portions (20, 22) of preforms (2) to be cooled are situated.

3. A cooling device according to claim 2, wherein the tubular arms (43-46; 431-433, 441-443, 461-463, 471-473) are connected at one end with an air chamber (41) and are closed at the other end.

4. A cooling device according to claim 1, 2 or 3, wherein between the receiving position (A) and the ejecting position (D) of the at least one robot arm (9-12) at least two successive cooling positions (B, C) are situated and that the cooling device has air channels which are of such design that in at least two cooling positions (B, C) cooling air can be supplied to the neck portions of the preforms to be cooled.

5. A cooling device according to claim 4, wherein the take-out robot comprises a rotor with four radially distributed robot arms (9-12) which each comprise a number of carrier strips with cooling tubes (18), wherein the robot arms (9-12) successively and cyclically assume the receiving position (A), a first cooling position (B), a second cooling position (C) and the ejecting position (D), which positions successively differ from each other by a substantially 90° rotation of the rotor, wherein the cooling device comprises two sets of tubular arms (43-46; 431-433, 441-443, 461-463, 471-473), which form air channels provided with air outflow openings (49), and wherein the two sets of tubular arms (43-46; 431-433, 441-443, 461-463, 471-473) include an angle with each other, such that one set of arms (45, 46; 461-463, 471-473) can cooperate with preforms of a robot arm in the first cooling position (B) while the second set of arms (43, 44; 431-433, 441-443) can simultaneously cooperate with preforms of a robot arm in the second cooling position (C).

6. A cooling device according to claim 4, wherein the two sets of arms (43-46; 431-433, 441-443, 461-463, 471-473) are both connected with a common central air chamber (41).

7. A cooling device according to claim 5 or 6, wherein each set of tubular arms comprises two or more pairs of arms (43-46; 431-433, 441-443, 461-463, 471-473) corresponding to the number of carrier strips (501-503) of the robot arms (9-12).

8. A cooling device according to claim 7, wherein adjacent tubular arms of different pairs have been combined into a single arm which is provided with outflow openings for cooling air on two longitudinal sides.

9. A take-out robot device, provided with a cooling device according to any one of the preceding claims.

10. A production apparatus for preforms provided with a take-out robot device according to claim 9.

## Patentansprüche

1. Kühlvorrichtung zum Kühlen des Halsbereichs von Vorformlingen von Kunststoffbehältern in Zusammenwirkung mit einer Entnahmerobotereinrichtung für eine Produktionsvorrichtung für Vorformlinge (2), wobei die Vorformlinge (2) sich in Kühlröhren (18) wenigstens eines Arms (9 - 13) des Entnahmeroboters (8) befinden, wobei wenigstens ein Arm (9 12) im Betrieb in Aufeinanderfolge eine Anzahl von Positionen einnimmt, einschließlich einer Aufnahmeposition (A), einer Ausstoßposition (D) und wenigstens einer Kühlposition (B, C), die zwischen der Aufnahmeposition (A) und der Ausstoßposition (D) liegt, wobei die Kühlröhren (18) die Vorformlinge (2) in einer solchen Weise aufnehmen, dass der Halsbereich (20, 22) der Vorformlinge (2) nach außen aus den Kühlröhren (18) vorsteht, wobei die Kühlvorrichtung (40) mit wenigstens einem Luftkanal mit Luftausströmöffnungen (49) versehen ist und wobei, wenn die Kühlvorrichtung in Zusammenwirkung mit dem Entnahmeroboter (8) ist, der wenigstens eine Luftkanal relativ fixiert zu der Kühlposition (B, C) des wenigstens einen Arms (9 - 12) des Entnahmeroboters (8) ist, so dass die Ausströmöffnungen den Halsbereichen (20, 22) der Vorformlinge (2) kühlende Luft zuführen können, die sich in den Kühlröhren (18) des wenigstens einen Arms (9 - 12) des Roboters (8) befinden, wenn sich der Arm (9 - 12) in der wenigstens einen Kühlposition (B, C) befindet.

2. Kühlvorrichtung nach Anspruch 1, wobei die Luftausströmöffnungen (49 in einander zugewandten Oberflächen wenigstens eines Paars von im Wesentlichen parallelen röhrenförmigen Armen (43 - 46, 431 - 433, 441 - 443, 461 - 463, 471 - 473) angeordnet sind, die die Luftkanäle bilden und zwischen denen, in der Kühlposition (C, D), zu kühlende Halsbereiche (20, 22) von Vorformlingen (2) angeordnet sind.

3. Kühlvorrichtung nach Anspruch 2, wobei die röhrenförmigen Arme (43 - 46; 431 - 433, 441 - 443, 461 - 463, 471 - 473) an einem Ende mit einer Luftkammer (41) verbunden sind und am anderen Ende verschlossen sind.

4. Kühlvorrichtung nach Anspruch 1, 2 oder 3, wobei zwischen der Aufnahmeposition (A) und der Ausstoßposition (D) des wenigstens einen Roboterarms (9 - 12) wenigstens zwei aufeinanderfolgende Kühlpositionen (B, C) liegen und wobei die Kühlvorrichtung Luftkanäle mit einer solchen Gestaltung hat, dass in wenigstens zwei Kühlpositionen (B, C) den Halsbereichen der zu kühlenden Vorformlinge kühlende Luft zugeführt werden kann.

5. Kühlvorrichtung nach Anspruch 4, wobei der Entnahmeroboter einen Rotor mit vier radial verteilten Roboterarmen (9 12) aufweist, die jeweils eine Anzahl von Trägerstegen mit Kühlröhren (18) aufweisen, wobei die Roboterarme (9 - 12) aufeinanderfolgend und zyklisch die Aufnahmeposition (A), eine erste Kühlposition (B), eine zweite Kühlposition (C) und die Ausstoßposition (D) einnehmen, wobei diese Positionen sich aufeinanderfolgend jeweils im Wesentlichen um eine 90°-Drehung des Rotors voneinander unterscheiden, wobei die Kühlvorrichtung zwei Sätze von röhrenförmigen Armen (43 - 46; 431 - 433, 441 - 443, 461 - 463, 471 - 473) aufweist, die mit Luftausströmöffnungen (49) versehene Luftkanäle bilden und wobei die beiden Sätze von röhrenförmigen Armen (43 - 46; 431 - 433, 441 - 443, 461 463, 471 - 473) einen Winkel zueinander einnehmen, so dass ein Satz von Armen (45, 46; 461 - 463, 471 - 473) mit Vorformlingen eines Roboterarms in der Kühlposition (B) zusammenwirken kann, während der zweite Satz von Armen (43, 44; 431 - 433, 441 - 443) gleichzeitig mit Vorformlingen eines Roboterarms in der zweiten Kühlposition (C) zusammenwirken kann.

6. Kühlvorrichtung nach Anspruch 4, wobei die beiden Sätze von Armen (43 - 46; 431 - 433, 441 - 443, 461 - 463, 471 - 473) beide mit einer gemeinsamen zentralen Luftkammer (41) verbunden sind.

7. Kühlvorrichtung nach Anspruch 5 oder 6, wobei jeder Satz von röhrenförmigen Armen zwei oder mehr Paare von Armen (43 - 46; 431 - 433, 441 - 443, 461 - 463, 471 - 473) entsprechend der Anzahl von Trägerstegen (501 503) der Roboterarme (9 - 12) aufweist.

8. Kühlvorrichtung nach Anspruch 7, wobei benachbarte röhrenförmige Arme von verschiedenen Paaren in einen einzelnen Arm kombiniert sind, der mit Ausströmöffnungen für Kühlluft an den beiden Längsseiten versehen ist.

9. Entnahmerobotereinrichtung, die mit einer Kühlvorrichtung nach einem der vorhergehenden Ansprüche versehen ist.

10. Produktionsvorrichtung für Vorformlinge, die mit einer Robotereinrichtung nach Anspruch 9 versehen ist.

## Revendications

1. Un dispositif de refroidissement pour refroidir la partie formant goulot de préformes de récipients en matière synthétique en coopération avec un dispositif de robot d'extraction pour un appareil de production pour préformes (2), dans lequel les préformes (2) sont situées dans des tubes (18) de refroidissement d'au moins un bras (9-12) du robot (8) d'extraction, lequel au moins un bras (9-12) prend en fonctionnement successivement un nombre de positions, comprenant une position de réception (A), une position d'éjection (D), et au moins une position de refroidissement (B, C) située entre la position de réception (A) et la position d'éjection (D), les tubes (18) de refroidissement recevant les préformes (2) d'une telle façon que la partie formant goulot (20, 22) des préformes (2) est en saillie des tubes (18) de refroidissement, le dispositif (40) de refroidissement étant muni d'au moins un canal d'air avec des ouvertures (49) de sortie de l'air, et, quand ledit dispositif (40) de refroidissement est en coopération avec le robot (8) d'extraction, ledit au moins un canal d'air étant fixé par rapport à la position de refroidissement (B, C) du au moins un bras (9-12) du robot (8) d'extraction de sorte que les ouvertures de sortie peuvent fournir de l'air refroidi aux parties formant goulot (20, 22) des préformes (2) qui sont situées dans les tubes (18) de refroidissement du au moins un bras (9-12) du robot (8) quand ce bras (9-12) est dans l'au moins une position de refroidissement (B, C).

2. Un dispositif de refroidissement selon la revendication 1, dans lequel les ouvertures (49) de sortie d'air sont agencées sur les surfaces se faisant mutuellement face d'au moins une paire de bras (43-46 ; 431-433, 441-443, 461-463, 471-473) tubulaires sensiblement parallèles qui forment des canaux d'air et entre lesquels, dans la position de refroidissement (C, D), sont situées les parties formant goulot (20, 22) des préformes à refroidir.

3. Un dispositif de refroidissement selon la revendication 2, dans lequel les bras (43-46 ; 431-433, 441-443, 461-463, 471-473) tubulaires sont connectés à une extrémité à une chambre (41) à air et sont fermées à l'autre extrémité.

4. Un dispositif de refroidissement selon les revendications 1, 2 ou 3, dans lequel entre la position de réception (A) et la position d'éjection (D) du au moins un bras (9-12) robotisé au moins deux positions de refroidissement (B, C) successives sont situées et que le dispositif de refroidissement a des canaux d'air qui sont conçus de telle manière que dans au moins deux positions de refroidissement (B, C) de l'air de refroidissement peut être fourni aux parties formant goulot (20, 22) des préformes à refroidir.

5. Un dispositif de refroidissement selon la revendication 4, dans lequel le robot d'extraction comprend un rotor avec quatre bras (9-12) robotisés distribués radialement qui comprennent chacun un nombre de supports en forme de ruban avec des tubes (18) de refroidissement, les bras (9-12) robotisés prenant successivement et de manière cyclique la position de réception (A), une première position de refroidissement (B), une deuxième position de refroidissement (C) et la position d'éjection (D), les positions différant successivement les unes des autres d'une rotation de sensiblement 90° du rotor, dans lequel le dispositif de refroidissement comprend deux séries de bras (43-46 ; 431-433, 461-463, 471-473) tubulaires qui forment des canaux d'air munis d'ouvertures (49) de sortie d'air, et les deux séries de bras (43-46 ; 431-433, 441-443, 461-463, 471-473) tubulaires faisant un angle l'un avec l'autre, de sorte que une série de bras (43-46 ; 431-433, 441-443, 461-463, 471-473) peut coopérer avec des préformes d'un bras robotisé dans la première position de refroidissement (B) tandis que la deuxième série de bras (43-46 ; 431-433, 461-463, 471-473) peut coopérer simultanément avec des préformes d'un bras robotisé dans la deuxième position de refroidissement (C).

6. Un dispositif de refroidissement selon la revendication 4, dans lequel les deux séries de bras (43-46 ; 431-433, 441-443, 461-463, 471-473) sont toutes les deux connectés avec une chambre (41) à air centrale commune.

7. Un dispositif de refroidissement selon l'une des revendications 5 ou 6, dans lequel chaque série de bras tubulaires comprend deux paires de bras (43-46 ; 431-433, 441-443, 461-463, 471-473) ou plus correspondant au nombre de supports en forme de ruban (501-503) des bras (9-12) de robot.

8. Un dispositif de refroidissement selon la revendication 7, dans lequel des bras tubulaires adjacents de paires différentes ont été combinés en un seul bras qui est muni avec des ouvertures de sortie pour l'air de refroidissement sur deux côtés longitudinaux.

9. Un dispositif de robot d'extraction, muni d'un dispositif de refroidissement selon l'une quelconque des revendications précédentes.

10. Un appareil de production de préformes muni d'un dispositif de robot d'extraction selon la revendication 9.
